# EUROPEAN PATENT SPECIFICATION

(11) **EP 0 900 617 B1**
(45) Date of publication and mention of the grant of the patent: **07.04.2004**
(21) Application number: 98304461.1
(22) Date of filing: 05.06.1998
(51) Int. Cl.: B23G 1/00, B23G 9/00, F16H 25/24

(54) **Improvements relating to screw threads**
Verbesserungen an Gewinden
Améliorations au filetage

(30) Priority: 06.09.1997 GB 9718866
(43) Date of publication of application: 10.03.1999
(73) Proprietor: Unova U.K. Limited, Aylesbury, Buckinghamshire HP20 2RQ (GB)
(72) Inventor: Riley, Martin John, Keighley, West Yorkshire, BD20 7TA (GB)
(74) Representative: Nash, Keith Wilfrid

(56) References cited:
- GB-A- 1 132 927
- GB-A- 1 396 711

## Description

### Subject of the Invention

This invention relates to screw threads and more particularly to the manufacture of a screw thread for a hydrostatic nut.

### Background to the Invention

Hydrostatic nuts are used in various engineering applications where an accurate movement is required with minimum backlash and wear. One particular application is in the field of machine tools where a hydrostatic nut, when mounted on a complementary screw threaded shaft, can be used as a lead screw for producing relative movement between a tool and a workpiece, eg in a grinding machine.

The manufacture of the female screw thread for a hydrostatic nut presents technical problems: thus the basic thread form, which will usually have straight flanks (often referred to as an Acme thread), must extend all the way through the nut, and an additional thread or groove for the hydraulic oil can only extend along each flank within the central part of the nut, so that the oil does not leak to any extent out at the ends of the groove. Difficulties have therefore been experienced in manufacturing such a nut with a concealed oil groove in each flank.

A method according to the preamble of claim 1 and a hydrostatic nut according to the preamble of claim 9 is known from GB-A- 1132927.

It is an object of the present invention to provide a new method of machining such a nut, and to provide an improved form of such a nut.

### Summary of the Invention

According to one aspect of the present invention there is provided a method of producing a hydrostatic nut comprising the steps of forming a female screw thread so as to include a groove which extends along the full length of at least one flank of the thread, and thereafter closing each end of the groove by means of a plug.

A groove may be formed in each flank of the thread, and if so, plugs are used to close off the ends of each such groove.

The flanks of the thread may be rectilinear in longitudinal section, in the form of an Acme thread.

Advantageously each end of a groove is closed by drilling and reaming a hole into the end of each groove, and sealingly .securing a plug therein.

The plug is conveniently in the form of a pin.

The axis of each drilled hole is preferably parallel to the central axis of the thread.

The method preferably comprises the further step of finishing off the basic thread profile closure of the groove or grooves by the insertion of the plugs to achieve this.

The invention also extends to a hydrostatic nut when produced in accordance with the method as aforesaid.

According to another aspect of the invention there is provided a hydrostatic nut having a female thread, a groove extending along the full length of at least one flank of the thread, and a separate closure at each end of the groove, to prevent oil loss therefrom and the closure comprising a pin or plug sealing enganged in a hole formed in the groove.

Preferably each flank of the thread is formed with a groove.

A preferred closure comprises a pin sealingly engaged in a hole formed in the groove. Typically each such hole is formed with its axis parallel to the central axis of the thread.

### Brief Description of Drawings

The invention will now be described, by way of example, with reference to the accompanying drawings, in which:
Figure 1 is an end view of a hydrostatic nut constructed in accordance with the invention;
Figures 2 to 4 are sectional views taken on the lines II-II, III-III and IV-IV
respectively of Figure 1.

### Detailed Description

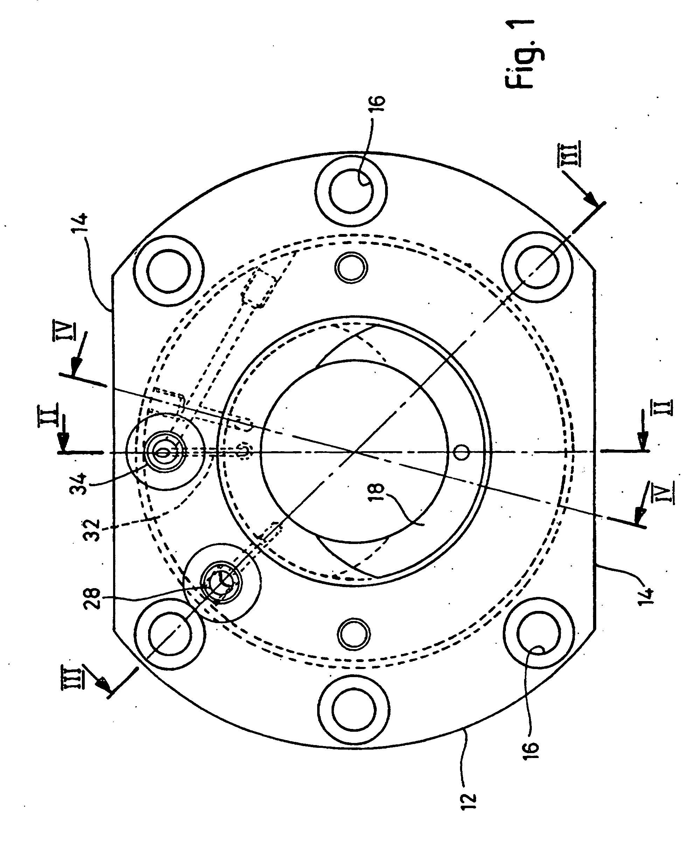

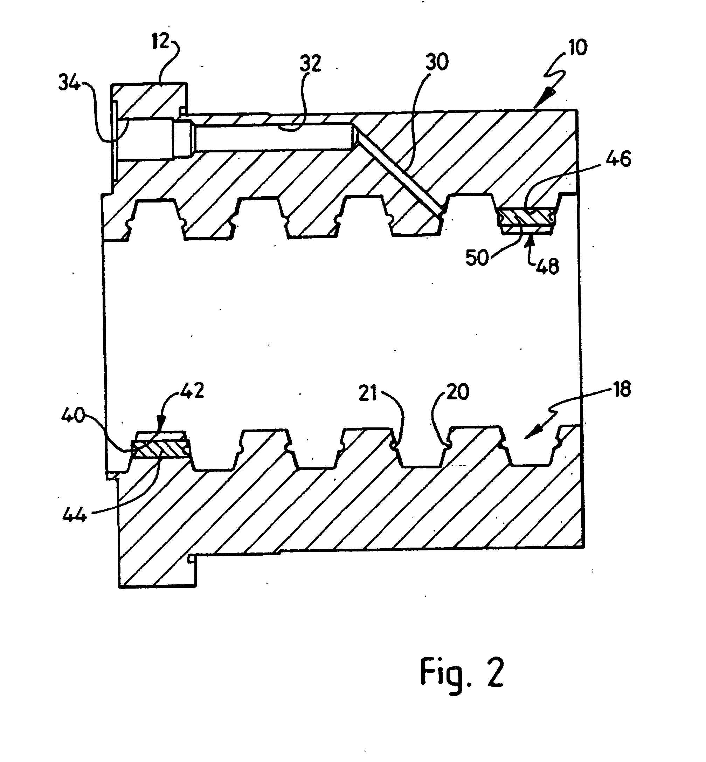

Referring first to Figures 1 and 2, the hydrostatic nut is rough machined on an NC lathe using a pre-formed insert. Typically an aluminium bronze alloy is used, and machining the nut comprises a main body 10 and a flange 12 at one end. Flats 14 are machined at the top and bottom of the flange, and six counter-bored fixing holes 16 are formed in the remainder of the flange.

Formed inside the nut, by a method to be described below, is a female Acme thread 18 typically of 25mm pitch and 54mm pitch circle diameter. The flanks of the thread are rectilinear in longitudinal section, as seen in the sectional view of Figure 2. Extending along the middle of each flank, at a position corresponding to the pitch circle diameter, is a shallow groove of semi-circular section and approximately 1mm deep, which in use is fed with hydraulic oil under appropriate pressure. As viewed in Figure 2, the left-hand facing groove is identified by reference numeral 20 and the right-hand facing groove by 21.

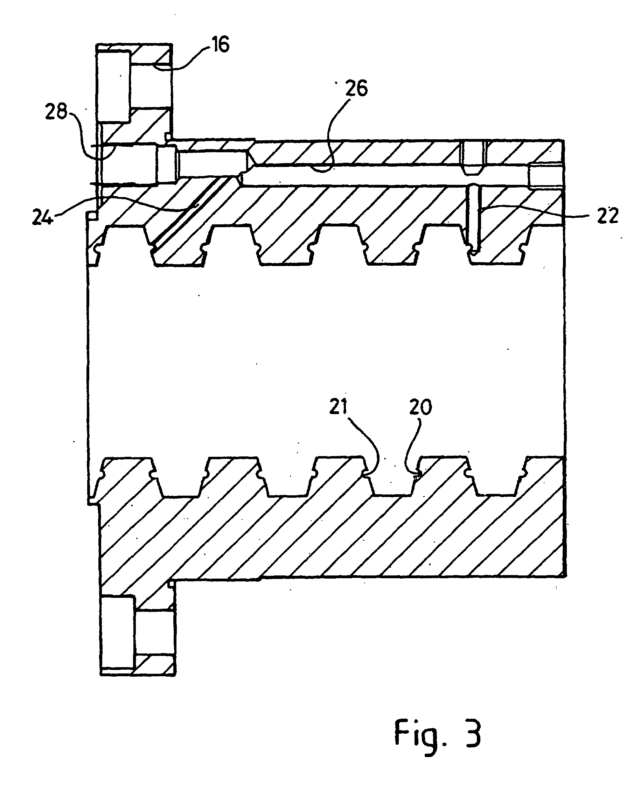

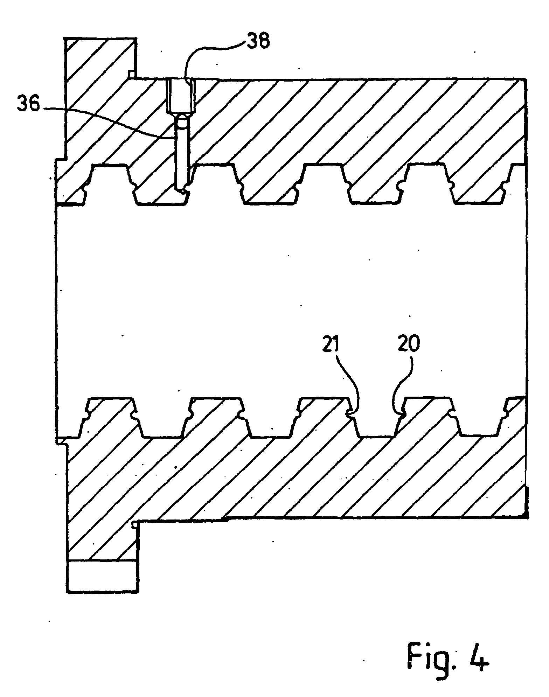

As shown in Figures 2 to 4, drillings 22, 24 and 26 connect the groove 20 to a tapped oil port 28; and drillings 30, 32 and 36 connect groove 21 with tapped oil ports 34 and 38.

Referring again to Figure 2, an axial drilling 40 joins grooves 20 and 21 across one of the thread profile 42, the drilling being closed, by a tightly fitting pin 44. The pin may be made from an aluminium bronze alloy.

A similar drilling 46 between the oil grooves 20, 21 across a profile 48 at the other end of the thread is closed by a second pin 50 in a similar manner.

The detailed operations in the manufacture of the nut will now be described.

A block of aluminium bronze alloy is faced and rough machined on an N.C. lathe tool. The basic Acme screw thread 18 and oil grooves 20, 21 are also rough turned, using a pre-formed tool insert to generate the required profiles. In accordance with the invention, the grooves 20, 21 are formed along the full length of the thread from one end to the other.

The various ports and passages are then drilled. The ports are tapped, and the two holes 40 and 46 for the pins 44 and 50 respectively are then drilled and reamed. Typically the holes are of 4mm diameter.

The whole of the partly finished hydrostatic nut is then cleaned and flushed out, after which the two pins 44, 50 are securely fitted into their respective holes 40 and 46 by first applying an adhesive such Loctite (R.T.M) and then pushing each pin into its hole. opposite ends of the pin 44 protrude into the grooves 20, 21 so as to prevent oil from leaking to the left-hand end of the thread 18 beyond the pin 44, thereby blocking off the left-hand ends of the two oil grooves 20 and 21.

In a similar way the pin 50 serves to prevent oil from leaking to the right hand end of the thread 18 beyond the protruding ends of pin 50, which close off the grooves 20, 21 at that end of the assembly.

Finally, the Acme thread profile of the nut is finish machined on an accurate thread cutting machine, so that when fitted to an appropriately machined male thread a clearance of the order of 5 microns is achieved between the corresponding faces of the male and female threads.

During this finish machining step the ends of the pins 40 which protrude beyond the flanks are also machined so as to be flush with the respective flanks. In this way the ends of both grooves 20 are completely blocked off by the pin ends, which as a result of the finish machining do not interfere with the engagement of the male and female threads.

## Claims

1. A method of producing a hydrostatic nut comprising the steps of forming a female screw thread (18) so as to include a groove (20,21) which extends along the full length of at least one flank of the thread (18), **characterised in** thereafter closing each end of the groove (20,21) by means of a plug (44,48).

2. A method according to claim 1 in which a groove (20,21) is formed in each flank of the thread (18), and plugs (44,48) are used to close off the ends of each such groove (20,21).

3. A method according to claim 1 or claim 2 in which the flanks of the thread (18) are rectilinear in longitudinal section, in the form of an Acme thread.

4. A method according to any one of claims 1 to 3 in which each end of the groove (20,21) is closed by drilling and reaming a hole (40,46) into the end of each groove, and sealingly securing a plug therein.

5. A method according to any one of claims 1 to 4 in which the plug (44,48) is in the form of a pin.

6. A method according to any one of claim 4 or claim 5 in which the axis of each drilled hole (40,46) is parallel to the central axis of the thread (18).

7. A method according to any one of preceding claims in which, prior to closing each end of the groove (20,21), passages are drilled in the nut to connect the exterior thereof with the groove, so that in use hydraulic oil can be fed to the groove.

8. A method according to any one preceding claims comprising the further step of finishing off the basic thread profile after closure of the groove (20,21) or grooves by the insertion of the plugs (44,48).

9. A hydrostatic nut having a female thread (18), a groove (20, 21) extending along the full length of at least one flank of the thread(18), **characterised by** a separate closure at each end of the groove (20,21), to prevent oil loss therefrom, the closure comprising a pin (44,48) or plug sealing engaged in a hole (40,46) formed in the groove (20,21).

10. A hydrostatic nut according to claim 9, in which each flank of the thread is formed with a groove.

11. A hydrostatic nut according to claim 9 or 10 in which each such hole is formed with its axis parallel to the central axis of the thread.

## Patentansprüche

1. Verfahren zum Herstellen einer hydrostatischen Schraubenmutter, bei dem ein Matrizen-Schraubgewinde (18) so ausgebildet wird, dass es eine Nut (20, 21) aufweist, die sich über die volle Länge mindestens einer Flanke des Gewindes (18) erstreckt, **dadurch gekennzeichnet, dass** im Anschluss daran jedes Ende der Nut (20, 21) mit Hilfe eines Stöpsels (44, 48) verschlossen wird.

2. Verfahren nach Anspruch 1, bei dem eine Nut (20, 21) in jeder Flanke des Gewindes (18) ausgebildet wird, und Stöpsel (44, 48) verwendet werden, um die Enden einer jeden dieser Nuten (20, 21) zu verschließen.

3. Verfahren nach Anspruch 1 oder 2, bei dem die Flanken des Gewindes (18) geradlinig im Längsabschnitt in Form eines Acme-Gewindes verlaufen.

4. Verfahren nach einem der Ansprüche 1 - 3, bei dem jedes Ende der Nut (20, 21) durch Bohren und Reiben eines Loches (40, 46) in das Ende einer jeden Nut geschlossen wird, und dass ein Stöpsel darin abdichtend festgelegt wird.

5. Verfahren nach einem der Ansprüche 1 - 4, bei dem der Stöpsel (44, 48) in Form eines Stiftes ausgebildet ist.

6. Verfahren nach einem der Ansprüche 4 oder 5, bei dem die Achse eines jeden gebohrten Loches (40, 46) parallel zur zentrischen Achse des Gewindes (18) verläuft.

7. Verfahren nach einem der vorausgehenden Ansprüche, bei dem vor dem Verschließen eines jeden Endes der Nut (20, 21) Durchflusslcanäle in die Mutter gebohrt werden, um das die Außenseite der Mutter mit der Nut zu verbinden, so dass im Betrieb Hydrauliköl in die Nut eingeführt werden kann.

8. Verfahren nach einem der vorausgehenden Ansprüche, bei dem das Fertigstellen des Grund-Schraubgewinde-Profiles nach dem Verschließen der Nut (20, 21) oder Nuten durch Einsetzen der Stöpsel (44, 48) vorgenommen wird.

9. Hydrostatische Mutter mit einem Matrizen-Gewinde (18) und einer Nut (20, 21), die sich über die volle Länge mindestens einer Flanke des Gewindes (18) erstreckt, **gekennzeichnet durch** einen getrennten Verschluss an jedem Ende der Nut (20, 21), um das Austreten von Öl daraus zu verhindern, wobei der Verschluss als Stift- (44, 48) oder Stöpsel-Dichtung in Eingriff mit einem in der Nut (20, 21) ausgebildeten Loch (40, 46) steht.

10. Hydrostatische Mutter nach Anspruch 9, bei der jede Flanke des Gewindes mit einer Nut versehen ist.

11. Hydrostatische mutter nach Anspruch 9 oder 10, bei der jedes derartige Loch so geformt ist, dass seine Achse parallel zur zentrischen Achse des Schraubgewindes verläuft.

## Revendications

1. Procédé de fabrication d'un écrou hydrostatique comprenant les étapes de formation d'un filetage de vis femelle (18), de manière à comprendre une gorge (20, 21) s'étendant sur la totalité de la longueur d'au moins un flanc du filetage (18), **caractérisé en ce qu'**il comprend en outre la fermeture de chaque extrémité de la gorge (20, 21) au moyen d'un bouchon (44, 48).

2. Procédé selon la revendication 1, dans lequel une gorge (20, 21) est formée dans chaque flanc du filetage (18), et des bouchons (44, 48) sont utilisés pour fermer les extrémités de chaque dite gorge (20, 21).

3. Procédé selon la revendication 1 ou la revendication 2, dans lequel les flans du filetage (18) sont de section longitudinale rectiligne, leur forme étant celle d'un filetage Acme.

4. Procédé selon l'une quelconque des revendications 1 à 3, dans lequel chaque extrémité de la gorge (20, 21) est fermée par perçage et alésage d'un trou (40, 46), dans l'extrémité de chaque gorge, et fixation, de façon étanche, d'un bouchon dans celui-ci.

5. Procédé selon l'une quelconque des revendications 1 à 4, dans lequel le bouchon (44, 48) se présente sous la forme d'un téton.

6. Procédé selon l'une quelconque des revendications 4 ou de la revendication 5, dans lequel l'axe de chaque trou (40, 46) percé est parallèle à l'axe central du filetage (18).

7. Procédé selon l'une quelconque des revendications précédentes, dans lequel, avant de fermer chaque extrémité de la gorge (20, 21), on perce dans l'écrou des passages pour relier sa partie extérieure à la gorge, de manière à pouvoir fournir, lors de l'utilisation de l'écrou, de l'huile hydraulique à la gorge.

8. Procédé selon l'une quelconque des revendications précédentes, comprenant l'étape supplémentaire de finition du profil de filetage de base après fermeture de la gorge (20, 21) ou des gorges, par insertion des bouchons (44, 48).

9. Ecrou hydrostatique comprenant un filetage femelle (18), une gorge (20, 21) s'étendant sur toute la longueur d'au moins un flanc du filetage (18), **caractérisé par** une fermeture séparée à chaque extrémité de la gorge (20, 21), afin d'empêcher toute perte d'huile depuis celle-ci, la fermeture comprenant un téton (44, 48) ou bouchon, engagé de façon étanche dans un trou (40, 46) formé dans la gorge (20, 21).

10. Ecrou hydrostatique selon la revendication 9, dans lequel chaque flanc du filetage est muni d'une gorge.

11. Ecrou hydrostatique selon la revendication 9 ou 10, dans lequel l'axe de chaque trou formé est parallèle à l'axe central du filetage.
